# EUROPÄISCHE PATENTSCHRIFT

(11) **EP 0 646 073 B1**
(45) Veröffentlichungstag und Bekanntmachung des Hinweises auf die Patenterteilung: **03.04.1996**
(21) Anmeldenummer: 93914588.4
(22) Anmeldetag: 08.06.1993
(51) Int. Cl.: B60Q 3/02, F21L 9/00

(54) **AUFLADBARE TASCHENLAMPE ZUM LÖSBAREN EINBAU IN EINEN TRÄGER IM INNENRAUM EINES KRAFTFAHRZEUGES**
RECHARGEABLE POCKET LAMP DETACHABLY MOUNTED IN A SUPPORT INSIDE A MOTOR VEHICLE
LAMPE DE POCHE RECHARGEABLE SE MONTANT DE MANIERE AMOVIBLE DANS UN SUPPORT DANS L'HABITACLE D'UNE AUTOMOBILE

(30) Priorität: 08.06.1992 ES 9201824 U
(43) Veröffentlichungstag der Anmeldung: 05.04.1995
(73) Patentinhaber: M. ROS S.A., E-08620 Sant Vicenc dels Horts (ES)
(72) Erfinder: SAGRISTA I. PRATS, Joaquim, E-08620 Sant Vicenc dels Horts (ES); HAMSCHER, Manfred, D-55543 Bad Kreuznach (DE); RUDOLPH, Gerd, D-6531 Aspisheim (DE)
(74) Vertreter: Becker, Bernd, Dipl.-Ing.
(86) Internationale Anmeldenummer: DE9300504
(87) Internationale Veröffentlichungsnummer: WO9325408

(56) Entgegenhaltungen:
- EP-A- 0 135 409
- DE-A- 3 141 971
- US-A- 4 713 735
- US-A- 4 974 129

## Beschreibung

Die Erfindung bezieht sich auf eine aufladbare Taschenlampe zum lösbaren Einbau in einen Träger im Innenraum eines Kraftfahrzeuges oder dergleichen, wobei die Taschenlampe im eingebauten Zustand selbsttätig mit dem Bordnetz des Kraftfahrzeuges zur Aufladung mindestens einer wiederaufladbaren Batterie verbunden und mit einer über einen Schalter einschaltbaren Lampe versehen ist, die hinter einer in ein Gehäuse der Taschenlampe eingesetzten, lichtdurchlässigen Abdeckung angeordnet ist. Bei einer derartigen, aus der EP-A-0 135 409 bekannten aufladbaren Taschenlampe ist der Schalter als Kippschalter ausgebildet.

Bekanntlich kommt es häufig vor, daß die Batterien von in Kraftfahrzeugen, Schiffen, Flugzeugen oder sonstigen Verkehrsmitteln, mitgeführten Taschenlampen längere Zeit nicht überprüft werden und die Taschenlampen im Bedarfsfall daher nicht einsatzbereit sind. Um diesem Nachteil abzuhelfen und eine Möglichkeit zu schaffen, eine stets einsatzbereite transportable Lichtquelle im Kraftfahrzeug zur Verfügung zu haben, ist es bereits, beispielsweise aus der DE 19 55 614 und der DE 35 44 742, bekannt, eine Taschenlampe mit einem wartungsfreien Akkumulator auszurüsten, über einen Träger leicht abnehmbar im Kraftfahrzeuginnern zu befestigen und im befestigten Zustand selbsttätig mit dem Stromnetz des Kraftfahrzeuges zur Aufladung zu verbinden. Hierbei dient eine Steckverbindung zwischen der Taschenlampe und dem Träger der elektrischen Kontaktgabe. Die Taschenlampe weist lediglich eine Lichtaustrittsfläche auf, wodurch der austretende Lichtstrahl bei einer bestimmten Handhabungsstellung der Taschenlampe zwangsläufig auch nur in eine Richtung gelenkt werden kann, was insofern nachteilig ist, als häufig bei einer bestimmten Position der Taschenlampe eine Beleuchtung eines anvisierten Objektes über die vorgegebene Lichtaustrittsfläche nicht möglich ist und zwar beispielsweise dann, wenn die Taschenlampe aus Platzgründen nicht in die gewünschte Richtung ausgerichtet werden kann. Des weiteren ist in das Gehäuse der bekannten Taschenlampe ein Dauermagnet eingelegt, der eine Verwendung der Taschenlampe als Haftleuchte ermöglicht. Mit Hilfe dieses Dauermagneten kann die Taschenlampe nur in einer bestimmten Ebene an einem eisenhaltigen Bauteil festgelegt werden, d.h. der Lichtstrahl kann durch Verdrehen der Taschenlampe nur in dieser Ebene verschwenkt werden. Sonach ist eine Beleuchtung eines nicht in der vorgegebenen Ebene liegenden Objektes nicht möglich.

Der Erfindung liegt die Aufgabe zugrunde, eine möglichst vielseitig verwendbare Taschenlampe der eingangs genannten Art zu schaffen.

Diese Aufgabe wird erfindungsgemäß dadurch gelöst, daß der Schalter ein verrastbares Drehrad aufweist, mit dem die Lampe fest verbunden ist, und daß bei entsprechender Verstellung des Drehrades mindestens eine weitere lichtdurchlässige Abdeckung im Gehäuse durch die Lampe beleuchtbar ist.

Durch diese Maßnahmen kann der Lichtstrahl bei aus dem Träger herausgenommener Taschenlampe und eingeschalteter Lampe durch entsprechende Verstellung des Drehrades in einer bestimmten Position der Taschenlampe entweder aus der einen oder der anderen Abdeckung austreten. Demnach sind also ohne Lageveränderung der Taschenlampe zwei zueinander beabstandete Objekte beleuchtbar. Dies ist insbesondere dann von Vorteil, wenn die Taschenlampe aus Platzgründen zur Beleuchtung eines bestimmten Objektes nicht in beliebiger Richtung ausgerichtet werden kann, denn in diesem Falle besteht die Möglichkeit, das zu beleuchtende Objekt durch den aus der einen oder anderen Abdeckung austretenden Lichtstrahl zu beleuchten.

Nach einer vorteilhaften Ausgestaltung der Erfindung sind die lichtdurchlässigen Abdeckungen farblich unterschiedlich ausgeführt. So ergibt sich auf einfache Weise die Möglichkeit, mit der Taschenlampe verschiedenfarbiges Licht auszusenden. Bevorzugt ist die eine Abdeckung glasklar und die andere Abdeckung amberfarbig ausgebildet. Damit steht Weiß-Licht als Suchbeleuchtung und Amber-Licht als Warnbeleuchtung zur Verfügung. Zweckmäßigerweise ist hierbei die glasklare Abdeckung als Linse gestaltet. So ergibt sich ein punktförmiger Lichtstrahl.

Bei einer weiteren vorteilhaften Ausgestaltung der Erfindung ist die als Deckenwand des rechteckförmigen Gehäuses ausgebildete, glasklare Abdeckung über zugehörige Klipsverbindungen und die amberfarbige Abdeckung über zugehörige Klipsverbindungen im oberen Bereich einer Seitenwand des Gehäuses festgelegt. Sonach können zum einen die Abdeckungen leicht montiert und gegebenenfalls ausgewechselt werden und zum anderen kann der Lichtstrahl um 90° verschwenkt aus der Taschenlampe austreten.

Nach einer vorteilhaften Weiterbildung der Erfindung ist die Lampe in eine radial konusförmige, als Reflektor dienende Aussparung des Drehrades eingesetzt, wobei das Drehrad mit Leiterbahnen einer Leiterplatte beaufschlagenden Schaltkontakten versehen ist. Dies bedingt eine wesentliche Kosteneinsparung, da das Drehrad gleichzeitig als Lampenträger, Reflektor, Schaltglied und Schaltknopf ausgebildet ist. Bevorzugt werden sämtliche Schaltfunktionen der Lampe über die mit entsprechenden Bauteilen bestückte Leiterplatte gesteuert.

Zur Erhöhung der Signalwirkung der Taschenlampe ist zweckmäßigerweise die Lampe in ihrer der amberfarbigen Abdeckung zugeordneten Stellung als Blinklampe geschaltet.

Um auf einfache Art definierte Stellungen des Drehrades zu erzielen, nimmt bei einer Weiterbildung der Erfindung das Drehrad ein federbelastetes Rastelement auf, das mit einer gehäusefesten Rastkurve mit drei Raststellungen zusammenwirkt, wobei in der mittleren Raststellung, in der die Lampe eine 45°-Stellung zu den beiden Abdeckungen einnimmt, die Lampe ausgeschaltet und in den übrigen Raststellungen eingeschaltet ist, in denen die Lampe entweder die glasklare Abdeckung oder die amberfarbige Abdeckung beaufschlagt.

Damit die Taschenlampe nicht im eingeschalteten Zustand der Lampe in den Träger eingesetzt werden kann, ist weiterhin bevorzugt vorgesehen, daß das Drehrad seitlich fest mit einem Schaltrad gekoppelt ist, das einen federbelastet, gehäuseseitig geführten Sperriegel derart beaufschlagt, daß im eingeschalteten Zustand der Lampe die Anschlußkontakte der Taschenlampe durch den Sperriegel mechanisch gegen ein Einstecken in den am Träger angeordneten Stecker gesperrt sind.

Bei einer weiteren Lösung der der Erfindung zugrundeliegenden Aufgabe ist das Gehäuse mit einem verschwenkbaren und in mehreren Stellungen verrastbaren Dauermagneten versehen.

Durch diese Maßnahme kann einerseits die Taschenlampe an jedem beliebigen eisenhaltigen Gegenstand mittels des Dauermagneten befestigt werden und andererseits kann der Lichtstrahl aufgrund der relativen Beweglichkeit zwischen dem Gehäuse und dem Dauermagneten in jede beliebige Richtung ausgerichtet werden, was insbesondere bei der Durchführung einer Reparatur am Kraftfahrzeug von Vorteil ist.

Zur einfachen Realisierung der Verbindung von Dauermagnet und Gehäuse ist in Ausgestaltung der Erfindung der Dauermagnet in einer zum Boden und der Vorderwand des rechteckförmigen Gehäuses hin offenen Aussparung gelagert und somit um 90° verschwenkbar. Hierbei ist bevorzugt der im Querschnitt U-förmig ausgebildete Dauermagnet mit einem geschlossenen Kunststoff-Überzug versehen, wobei die freien Enden der Flansche des Dauermagneten über das Gehäuse vorstehen. So wird sowohl eine Verschmutzung des Dauermagneten ausgeschlossen als auch eine sichere Befestigung an einem eisenhaltigen Gegenstand gewährleistet.

Zwecks Erreichung einer zuverlässigen Verrastung des Dauermagneten ist nach einer vorteilhaften Weiterbildung der Erfindung in den Steg des Dauermagneten ein federbelastetes Rastelement eingesetzt, das mit einer gehäuseseitigen, mehrere Raststellungen bestimmenden Rastkurve zusammenwirkt.

Für eine sichere Halterung der Taschenlampe im Träger umfaßt nach einer weiteren Ausgestaltung des Erfindungsgegenstandes der Träger der Taschenlampe eine Aufnahmeplatte mit seitlich vorstehenden Führungen und mit einem die Führungen verbindenden, im mittleren Bereich weiter vorstehenden Boden, wobei auf dem Boden der an das Bordnetz des Kraftfahrzeuges angeschlossene Stecker angeschlossen ist und der mittlere Bereich des Bodens mit mindestens einem im entsprechenden Abstand zu der Aufnahmeplatte verlaufenden Haltesteg versehen ist. Im eingesetzten Zustand der Taschenlampe in den Träger ist also die Taschenlampe zwischen der Aufnahmeplatte und dem Haltesteg verspannt. Damit die Taschenlampe auch bei starken Stößen auf den Träger nicht aus diesem herausgleitet, ist zweckmäßigerweise seitlich neben dem Haltesteg eine Rastzunge mit einer Rastnase an dem Boden angeformt, die mit einer entsprechenden Vertiefung in der Vorderwand des Gehäuses der Taschenlampe zusammenwirkt.

In einer vorteilhaften Ausführungsform der Erfindung ist der Träger der Taschenlampe im Handschuhfach des Kraftfahrzeuges angeordnet. Dadurch wird eine optisch nicht störende Aufbewahrung der Taschenlampe erzielt.

Ferner ist bei einer weiteren Ausgestaltung der Erfindung die Taschenlampe mit einem über eine Drucktaste einschaltbaren akustischen Alarmgeber versehen. So wird neben einer optischen Signalwirkung der Taschenlampe auch eine akustische Signalwirkung erreicht.

Damit im Falle eines Ausfalls der aufladbaren Batterie diese ausgewechselt werden kann, sind zweckmäßigerweise eine oder mehrere aufladbare Batterien auswechselbar in dem Gehäuse aufgenommen. Hierbei sind bevorzugt die aufladbaren Batterien hinter einem in der Seitenwand eines Gehäuses in Längsrichtung verschiebbar geführten Deckel angeordnet, der auf seiner Innenseite eine die Batterien verbindende Kontaktbrücke trägt und der bei von der Seitenwand des Gehäuses abgenommener lichtdruchlässiger Abdeckung in den Aufnahmebereich dieser Abdeckung bewegbar ist. Dadurch ist sowohl in geöffneter als auch in geschlossener Stellung des Deckels ein hinreichender Schutz der an dem Deckel befestigten Kontaktbrücke gewährleistet.

Der der Erfindung zugrundeliegende Gedanke wird in der nachfolgenden Beschreibung eines Ausführungsbeispieles, das in der Zeichnung dargestellt ist, näher erläutert. Es zeigt:

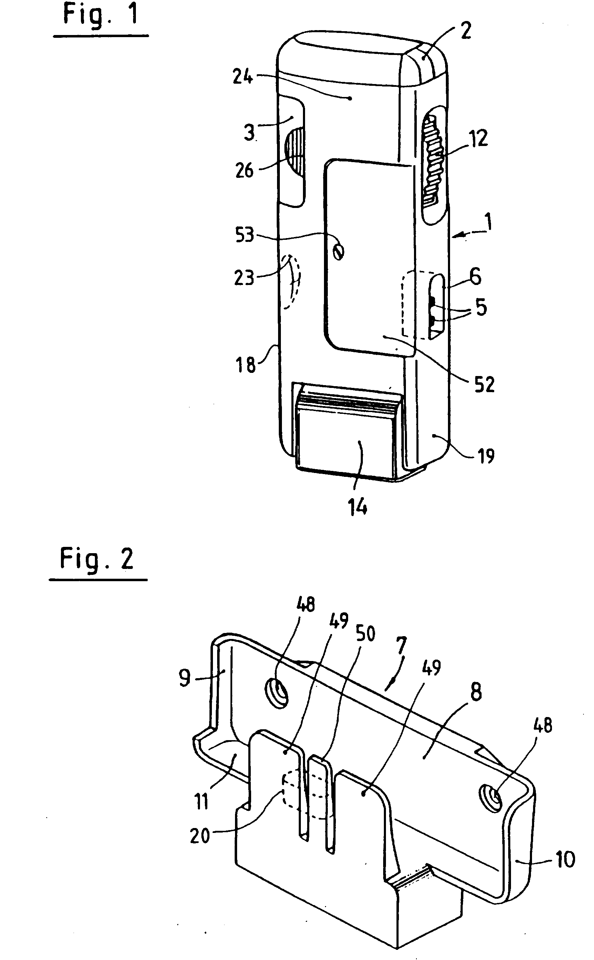

- Fig. 1: eine perspektivische Ansicht der Taschenlampe,
- Fig. 2: eine perspektivische Ansicht des Trägers der Taschenlampe,

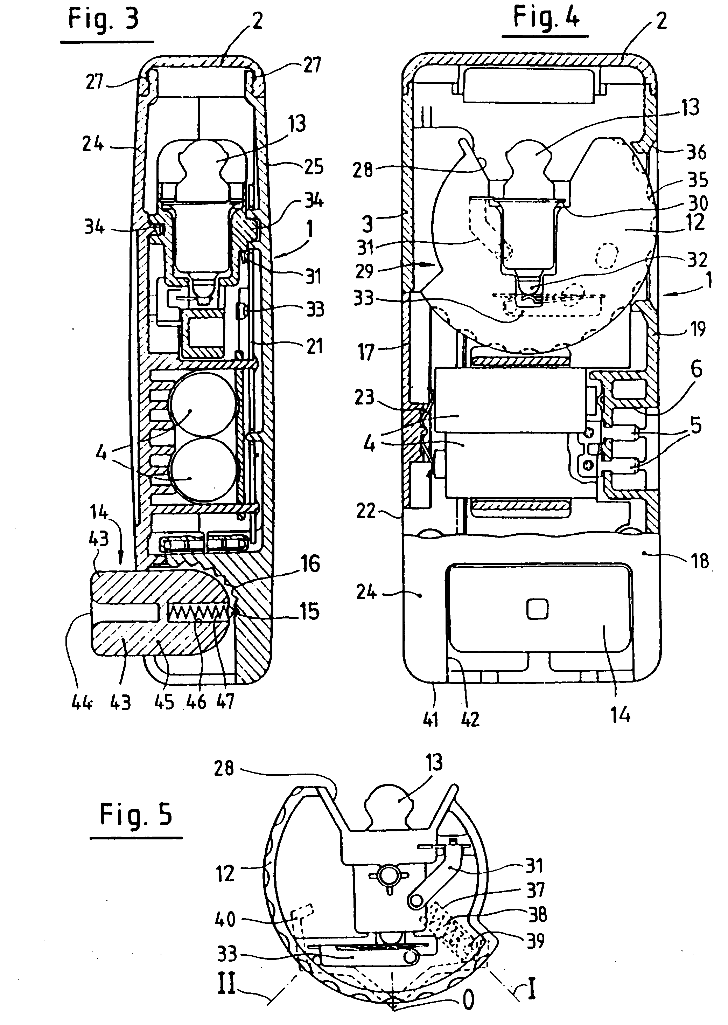

- Fig. 3: einen Längsschnitt durch die Taschenlampe nach Fig. 1 mit verschwenktem Dauermagneten im vergrößerten Maßstab,
- Fig. 4: eine Seitenansicht auf die Darstellung nach Fig. 3, teilweise im Schnitt,
- Fig. 5: eine Einzeldarstellung des als Betätigungsorgan der Taschenlampe dienenden Drehrades,

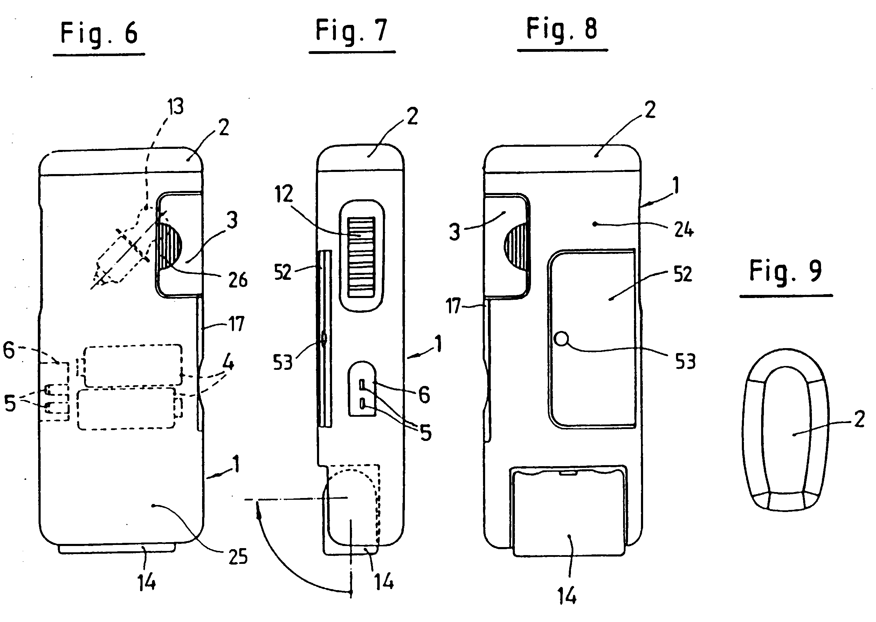

- Fig. 6: eine Rückansicht der Taschenlampe nach Fig. 1 im verkleinerten Maßstab,
- Fig. 7: eine Seitenansicht der Taschenlampe nach Fig. 1 im verkleinerten Maßstab,
- Fig. 8: eine Vorderansicht der Taschenlampe nach Fig. 1 im verkleinerten Maßstab,
- Fig. 9: eine Draufsicht auf die Darstellung nach Fig. 7,

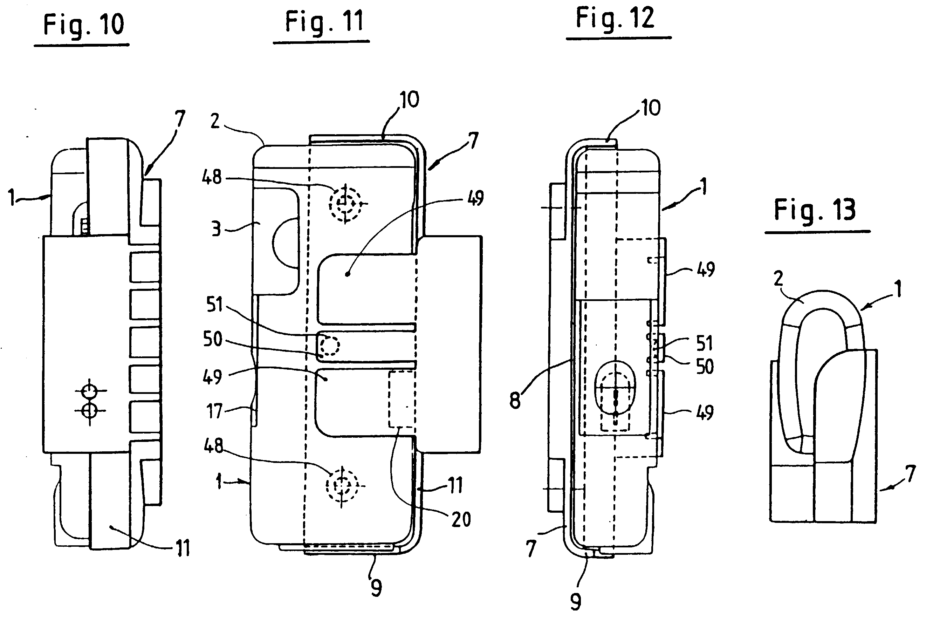

- Fig. 10: eine Unteransicht des Trägers mit eingesetzter Taschenlampe,
- Fig. 11: eine Seitenansicht auf die Darstellung nach Fig. 10,
- Fig. 12: eine Seitenansicht der Darstellung nach Fig. 11 und
- Fig. 13: eine Draufsicht auf die Darstellung nach Fig. 10.

Die Taschenlampe 1 weist ein rechteckförmiges Gehäuse 18 auf, in dessen einer Seitenwand 19 eine Anschlußkontakte 5 aufnehmende Vertiefung 6 eingelassen ist, die mit einem an einem Träger 7 für die Taschenlampe 1 angebrachten Stecker 20 korrespondiert. Die Anschlußkontakte 5 stehen mit zwei nebeneinanderliegenden, aufladbaren Batterien 4 und einer Leiterplatte 21 mit entsprechenden Bauteilen zur Steuerung sämtlicher Schaltfunktionen der Taschenlampe 1 in Verbindung. Den Anschlußkontakten 5 gegenüber befindet sich in der anderen Seitenwand 22 des Gehäuses 18 ein in Längsrichtung verschiebbar geführter Deckel 17. An der Innenseite trägt oder Deckel 17 eine die beiden Batterien 4 verbindende Kontaktbrücke 23. Oberhalb des Deckels 17 ist in die Seitenwand 22 eine lichtdurchlässige, amberfarbige Abdeckung 3 eingesetzt, die sich bis in die Vorderwand 24 und die Rückwand 25 des Gehäuses 18 erstreckt und hier mittels lösbarer Klipsverbinden 26 festgelegt ist. Nach Abnahme der Abdeckung 3 kann der Deckel 17 in den Aufnahmebereich der Abdeckung 3 verschoben werden, so daß die aufladbaren Batterien 4 gegebenenfalls schnell ausgewechselt werden können. Eine lichtdurchlässige, glasklare und als Linse ausgebildete Abdeckung 2 bildet die Deckenwand des Gehäuses 18, wobei die Abdeckung 2 über lösbare Klipsverbindungen 27 im Bereich der Vorderwand 24 und der Rückwand 25 des Gehäuses 18 in ihrer Position gehalten ist. Alternativ kann die Abdeckung 2 auch mit dem Gehäuse 18 verschweißt sein. Den beiden Abdeckungen 2, 3 ist eine verschwenkbare Lampe 13 zugeordnet.

Die Lampe 13 ist in eine radial konusförmige Aussparung 28 eines verrastbaren Drehrades 12 eines elektrischen Schalters 29 eingesetzt, wobei der obere Bereich der Aussparung 28 gleichzeitig als Reflektor dient. Der Seitenkontakt 30 der Lampe 13 ist über einen Schaltkontakt 31 und der Fußkontakt 32 der Lampe 13 über einen Schaltkontakt 33 mit der Leiterplatte 21 verbunden. Das in an der Vorderwand 24 und an der Rückwand 25 des Gehäuses 18 in gegenüberliegenden Lagern 34 aufgenommene Drehrad 12 weist an seiner Peripherie teilweise eine Riffelung 35 auf, der eine entsprechende Ausnehmung 36 in der Seitenwand 19 zur Betätigung des Drehrades 12 zugeordnet ist. Das Drehrad 12 trägt in einer angeformten Halterung 37 ein durch eine Druckfeder 38 beaufschlagtes Rastelement 39, das mit einer gehäusefesten Rastkurve 40 zusammenwirkt. Die Rastkurve 40 bestimmt drei Raststellungen I, 0, II des Drehrades 12. In der mittleren Raststellung 0 ist die Lampe 13 ausgeschaltet und nimmt eine 45°-Stellung zwischen den lichtdurchlässigen Abdeckungen 2, 3 ein. In der Raststellung I ist die Lampe 13 eingeschaltet und beaufschlagt die Abdeckung II, während in der Raststellung II die Lampe 13 ebenfalls eingeschaltet ist und die Abdeckung 3 beaufschlagt. Die Lampe 13 ist also um 90° zwischen den beiden Abdeckungen 2, 3 verschwenkbar. In der Raststellung II ist die Lampe als Blinklampe geschaltet.

In einer zum Boden 41 und zur Vorderwand 24 des Gehäuses 18 hin offenen Aussparung 42 ist ein Dauermagnet 14 um 90° verdrehbar und in mehreren Stellungen verrastbar gelagert. Die freien Enden der Flansche 43 des im Querschnitt U-förmig ausgebildeten Dauermagneten 14 stehen über das Gehäuse 18 vor. Ein geschlossener Kunststoffüberzug 44 umgibt den Dauermagneten 14. Der Steg 45 des Dauermagneten 14 nimmt in einer Sackbohrung 46 ein durch eine Druckfeder 47 belastetes Rastelement 15 auf, das durch eine Durchbrechung im Kunststoff-Überzug 44 aus dem Dauermagneten 14 herausragt und mit einer gehäuseseitigen, mehrere Raststellungen des Dauermagneten 14 bestimmenden Rastkurve 16 zusammenwirkt. Mittels des verstellbaren Dauermagneten 14 kann also die Taschenlampe 1 in verschiedenen Ebenen an einem eisenhaltiger Gegenstand befestigt werden.

Der Träger 7 für die Taschenlampe 1 umfaßt eine Aufnahmeplatte 8 mit Befestigungsbohrungen 48. Anstelle der Befestigungsbohrungen 48 können auch Klipsverbindungen vorgesehen sein. An der Aufnahmeplatte 8 sind seitlich vorstehende Führungen 9, 10 angeformt, die unten in einen an der Aufnahmeplatte 8 angeformten Boden 11 übergehen. Auf dem Boden 11 ist der mit dem Bordnetz des Kraftfahrzeuges verbundene Stecker 20 angeordnet. Der im mittleren Bereich weiter vorstehende Boden 11 trägt zwei zueinander beabstandete und in einem bestimmten parallelen Abstand zu der Aufnahmeplatte verlaufende Haltestege 49. Die Haltestege 49 sorgen für eine Verspannung der in den Träger 7 eingesetzten Taschenlampe 1 mit der Aufnahmeplatte 8, wobei die Haltestege 49 in eine entsprechende Aussparung 52 der Vorderwand 24 des Gehäuses 18 eingreifen. In dem Raum zwischen den Haltestegen 49 erstreckt sich eine an dem Boden 11 angeformte Rastzunge 50 mit einer Rastnase 51, die mit einer entsprechenden Vertiefung 53 in der Vorderwand 24 des Gehäuses 18 zusammenwirkt.

Die vorstehende Zeichnungsbeschreibung hat die Konstruktion sowie die Anwendung der erfindungsgemäßen Taschenlampe 1 mit zugehörigem Träger 7 in ihren Einzelheiten verdeutlicht. Es versteht sich jedoch für den Fachmann, daß der Grundgedanke der vorliegenden Erfindung eine wesentlich breitere Anwendung finden kann und nicht auf das hier speziell betrachtete Ausführungsbeispiel beschränkt ist.

## Patentansprüche

1. Aufladbare Taschenlampe zum lösbaren Einbau in einen Träger im Innenraum eines Kraftfahrzeuges oder dergleichen, wobei die Taschenlampe im eingebauten Zustand selbsttätig mit dem Bordnetz des Kraftfahrzeuges zur Aufladung mindestens einer wiederaufladbaren Batterie verbunden und mit einer über einen Schalter einschaltbaren Lampe versehen ist, die hinter einer in ein Gehäuse der Taschenlampe eingesetzten, lichtdurchlässigen Abdeckung angeordnet ist, dadurch gekennzeichnet, daß der Schalter (29) ein verrastbares Drehrad (12) aufweist, mit dem die Lampe (13) fest verbunden ist, und daß bei entsprechender Verstellung des Drehrades mindestens eine weitere lichtdurchlässige Abdeckung (3) im Gehäuse (18) durch die Lampe (13) beleuchtbar ist.

2. Taschenlampe nach Anspruch 1, dadurch gekennzeichnet, daß die lichtdurchlässigen Abdeckungen (2, 3) farblich unterschiedlich ausgeführt sind.

3. Taschenlampe nach Anspruch 1 oder 2, dadurch gekennzeichnet, daß die eine Abdeckung (2) glasklar und die andere Abdeckung (3) amberfarbig ausgebildet ist.

4. Taschenlampe nach einem der Ansprüche 1 bis 3, dadurch gekennzeichnet, daß die glasklare Abdeckung (2) als Linse gestaltet ist.

5. Taschenlampe nach einem der Ansprüche 1 bis 4, dadurch gekennzeichnet, daß die als Deckenwand des rechteckförmigen Gehäuses (18) ausgebildete, glasklare Abdeckung (2) über zugehörige Klipsverbindungen (26) und die amberfarbige Abdeckung (3) über zugehörige lösbare Klipsverbindungen (27) im oberen Bereich einer Seitenwand (22) des Gehäuses (18) festgelegt ist.

6. Taschenlampe nach einem der Ansprüche 1 bis 5, dadurch gekennzeichnet, daß die Lampe (13) in einer radial konusförmige, als Reflektor dienende Aussparung (28) des Drehrades (12) eingesetzt ist, wobei das Drehrad (12) mit Leiterbahnen einer Leiterplatte (21) beaufschlagenden Schaltkontakten (31, 33) versehen ist.

7. Taschenlampe nach einem der Ansprüche 1 bis 6, dadurch gekennzeichnet, daß sämtliche Schaltfunktionen der Lampe (13) über die mit entsprechenden Bauteilen bestückte Leiterplatte (21) gesteuert werden.

8. Taschenlampe nach einem der Ansprüche 1 bis 7, dadurch gekennzeichnet, daß die Lampe (13) in ihrer der amberfarbigen Abdeckung (3) zugeordneten Stellung als Blinklampe geschaltet ist.

9. Taschenlampe nach einem der Ansprüche 1 bis 8, dadurch gekennzeichnet, daß das Drehrad (12) ein federbelastetes Rastelement (39) aufnimmt, das mit einer gehäusefesten Rastkurve (40) mit drei Raststellungen (I, 0, II) zusammenwirkt, wobei in der mittleren Raststellung (0) in der die Lampe (13) eine 45°-Stellung zu den beiden Abdeckungen (2, 3) einnimmt, die Lampe (13) ausgeschaltet und in den übrigen Raststellungen (I, II) eingeschaltet ist, in denen die Lampe (13) entweder die glasklare Abdeckung (2) oder die amberfarbige Abdeckung (3) beaufschlagt.

10. Taschenlampe nach einem der Ansprüche 1 bis 9, dadurch gekennzeichnet, daß das Drehrad (12) seitlich fest mit einem Schaltrad gekoppelt ist, das einen federblastet gehäuseseitig geführten Sperriegel derart beaufschlagt, daß im eingeschalteten Zustand der Lampe (13) die Anschlußkontakte (5) der Taschenlampe (1) durch den Sperriegel mechanisch gegen ein Einstecken in den am Träger (7) angeordneten Stecker (20) gesperrt sind.

11. Taschenlampe nach dem Oberbegriff des Anspruchs 1, dadurch gekennzeichnet, daß das Gehäuse (18) mit einem verschwenkbaren und in mehreren Stellungen verrastbaren Dauermagneten (14) versehen ist.

12. Taschenlampe nach Anspruch 11, dadurch gekennzeichnet, daß der Dauermagnet (14) in einer zum Boden (41) und der Vorderwand (24) des rechteckförmigen Gehäuses (18) hin offenen Aussparung (42) gelagert und somit um 90° verschwenkbar ist.

13. Taschenlampe nach den Ansprüchen 11 und 12, dadurch gekennzeichnet, daß der im Querschnitt U-förmig ausgebildete Dauermagnet (14) mit einem geschlossenen Kunststoff-Überzug (44) versehen ist, wobei die freien Ende der Flansche (43) des Dauermagneten (14) über das Gehäuse (18) vorstehen.

14. Taschenlampe nach einem der Ansprüche 11 bis 13, dadurch gekennzeichnet, daß in den Steg (45) des Dauermagneten (14) ein federbelastetes Rastelement (15) eingesetzt ist, das mit einer gehäuseseitigen, mehrere Raststellungen bestimmenden Rastkurve (16) zusammenwirkt.

15. Taschenlampe nach einem der Ansprüche 1 bis 14, dadurch gekennzeichnet, daß der Träger (7) derselben eine Aufnahmeplatte (8) mit seitlich vorstehenden Führungen (9, 10) und mit einem die Führungen (9, 10) verbindenden, im mittleren Bereich weiter vorstehenden Boden (11) umfaßt, wobei auf dem Boden (11) der an das Bordnetz des Kraftfahrzeuges angeschlossene Stecker (20) angeordnet ist und der mittlere Bereich des Bodens (11) mit mindestens einem im entsprechenden Abstand zu der Aufnahmeplatte (8) verlaufenden Haltesteg (49) versehen ist.

16. Taschenlampe nach Anspruch 15, dadurch gekennzeichnet, daß seitlich neben dem Haltesteg (49) eine Rastzunge (50) mit einer Rastnase (51) an dem Boden (11) angeformt ist, die mit einer entsprechenden Vertiefung in der zugeordneten Vorderwand (24) des Gehäuses (18) zusammenwirkt.

17. Taschenlampe nach einem der Ansprüche 1 bis 16, dadurch gekennzeichnet, daß der Träger (7) derselben im Handschuhfach des Kraftfahrzeuges angeordnet ist.

18. Taschenlampe nach einem der Ansprüche bis 17, dadurch gekennzeichnet, daß sie mit einem über eine Drucktaste einschaltbaren, akustischen Alarmgeber versehen ist.

19. Taschenlampe nach einem der Ansprüche 1 bis 18, dadurch gekennzeichnet, daß eine oder mehrere aufladbare Batterien (4) auswechselbar in dem Gehäuse (18) aufgenommen sind.

20. Taschenlampe nach einem der Ansprüche 1 bis 19, dadurch gekennzeichnet, daß die aufladbaren Batterien (4) hinter einem in der Seitenwand (12) des Gehäuses (18) in Längsrichtung verschiebbar geführten Deckel (17) angeordnet sind, der auf seiner Innenseite eine die Batterien (4) verbindende Kontaktbrücke (23) trägt und der bei von der Seitenwand (12) des Gehäuses (18) abgenommener lichtdurchlässiger Abdeckung (3) in den Aufnahmebereich dieser Abdeckung (3) bewegbar ist.

## Claims

1. Rechargeable torch to be detachably installed in a support in the interior of an automotive vehicle or the like, the torch being, in its installed position, automatically connected to the on-board power supply of the automotive vehicle for the charging of at least one rechargeable battery and being provided with a bulb which can be switched-on via a switch, said bulb being disposed behind a light-permeable cover inserted into a housing of the torch, characterised in that the switch (29) has a lockable rotary wheel (12), to which the bulb (13) is securely connected, and in that, when the rotary wheel is adjusted accordingly, at least one additional light-permeable cover (3) in the housing (18) can be illuminated by the bulb (13).

2. Torch according to claim 1, characterised in that the light-permeable covers (2, 3) are of different colours.

3. Torch according to claim 1 or 2, characterised in that one cover (2) is clear glass and the other cover (3) is amber-coloured.

4. Torch according to one of claims 1 to 3, characterised in that the clear-glass cover (2) is configured as a lens.

5. Torch according to one of claims 1 to 4, characterised in that the clear-glass cover (2), which is configured as the top wall of the rectangular housing (18), is secured in the upper region of a lateral wall (22) of the housing (18) via associated clip connections (26), and the amber-coloured cover (3) is secured therein via associated detachable clip connections (27).

6. Torch according to one of claims 1 to 5, characterised in that the bulb (13) is inserted in a radially conical recess (28), which is provided in the rotary wheel (12) and serves as the reflector, the rotary wheel (12) being provided with switching contacts (31, 33), which impinge on conductor paths of a printed circuit board (21).

7. Torch according to one of claims 1 to 6, characterised in that all of the switching functions of the bulb (13) are controlled via the printed circuit board (21), which is fitted with corresponding component parts.

8. Torch according to one of claims 1 to 7, characterised in that the bulb (13) is switched as a flash bulb in its position associated with the amber-coloured cover (3).

9. Torch according to one of claims 1 to 8, characterised in that the rotary wheel (12) accommodates a spring-loaded locking element (39), which co-operates with a locking cam (40) secured to the housing and having three locking positions (I, 0, II), the bulb (13) being switched-off in the central locking position (0), in which the bulb (13) assumes a 45° position relative to the two covers (2, 3), and the bulb (13) being switched-on in the other remaining locking positions (I, II), in which the bulb (13) acts on either the clear-glass cover (2) or the amber-coloured cover (3).

10. Torch according to one of claims 1 to 9, characterised in that the rotary wheel (12) is coupled laterally and securely to a switch wheel which acts on a lock bolt, which is guided in a spring-loaded manner at the housing end, in such a manner that, when the bulb (13) is in its switched-on state, the connection contacts (5) of the torch (1) are mechanically blocked by the lock bolt to prevent them entering the plug (20) disposed on the support (7).

11. Torch according to the preamble of claim 1, characterised in that the housing (18) is provided with a pivotable permanent magnet (14), which is lockable in a plurality of positions.

12. Torch according to claim 11, characterised in that the permanent magnet (14) is mounted in a recess (42), which is open towards the base (41) and the front wall (24) of the rectangular housing (18), and is, in consequence, pivotable through 90°.

13. Torch according to claims 11 and 12, characterised in that the permanent magnet (14), which has a U-shaped cross-section, is provided with an enclosing plastics material coating (44), the free ends of the flanges (43) of the permanent magnet (14) protruding beyond the housing (18).

14. Torch according to one of claims 11 to 13, characterised in that a spring-loaded locking element (15) is inserted into the web (45) of the permanent magnet (14) and co-operates with a locking cam (16) at the housing end, which cam determines a plurality of locking positions.

15. Torch according to one of claims 1 to 14, characterised in that the support (7) of same includes a receiving plate (8) having laterally protruding guide means (9, 10) and having a base (11), which connects the guide means (9, 10) and protrudes further in the central region, the plug (20) being disposed on the base (11) and communicating with the on-board power supply of the automotive vehicle, and the central region of the base (11) being provided with at least one retaining web (49), which extends at an appropriate spacing from the receiving plate (8).

16. Torch according to claim 15, characterised in that a locking tongue (50) is fitted with a locking projection (51) on the base (11) laterally adjacent the retaining web (49) and co-operates with a corresponding recess in the associated front wall (24) of the housing (18).

17. Torch according to one of claims 1 to 16, characterised in that the support (7) of same is disposed in the glove compartment of the automotive vehicle.

18. Torch according to one of claims 1 to 17, characterised in that it is provided with an acoustic alarm transmitter which can be switched-on via a push-button.

19. Torch according to one of claims 1 to 18, characterised in that one or more rechargeable batteries (4) are interchangeably accommodated in the housing (18).

20. Torch according to one of claims 1 to 19, characterised in that the rechargeable batteries (4) are disposed behind a closure (17), which is guided in the lateral wall (22) of the housing (18) in a longitudinally displaceable manner, said closure carrying on its internal surface a contact bridge (23), which connects the batteries (4), and said closure being displaceable in the receiving region of the light-permeable cover (3) when said cover (3) has been removed from the lateral wall (22) of the housing (18).

## Revendications

1. Lampe de poche rechargeable à monter de manière amovible dans un support dans l'habitacle d'une automobile ou similaire, la lampe de poche à l'état monté étant automatiquement reliée au réseau de bord de l'automobile pour charger au moins une batterie rechargeable et étant pourvue d'une lampe à allumer par un interrupteur, qui est placée derrière un capot translucide, inséré dans un boîtier de la lampe de poche, caractérisée en ce que l'interrupteur (29) présente une roue tournante (12) pouvant être arrêtée, à laquelle la lampe (13) est reliée fixement, et en ce que lors d'un déplacement correspondant de la roue tournante, au moins un autre capot translucide (3) dans le boîtier (18) peut être éclairé par la lampe (13).

2. Lampe de poche selon la revendication 1, caractérisée en ce que les capots (2, 3) translucides sont réalisés dans des couleurs différentes.

3. Lampe de poche selon la revendication 1 ou 2, caractérisée en ce qu'un capot (2) est transparent comme du verre et l'autre capot (3) est de couleur ambrée.

4. Lampe de poche selon l'une des revendications 1 à 3, caractérisée en ce que le capot transparent comme du verre (2) est conçu comme une lentille.

5. Lampe de poche selon l'une des revendications 1 à 4, caractérisée en ce que le capot transparent comme du verre (2), configuré en paroi de couvercle du boîtier rectangulaire (18), est fixé par des liaisons clipsées associées (26) et le capot de couleur ambrée (3) par des liaisons clipsées amovibles associées (27), dans la zone supérieure d'une paroi latérale (22) du boîtier (18).

6. Lampe de poche selon l'une des revendications 1 à 5, caractérisée en ce que la lampe (13) est insérée dans une découpe (28) de la roue tournante (12) radialement en forme de cône, servant de réflecteur, la roue tournante (12) étant pourvue de contacts de commutation (31, 33) agissant sur des pistes conductrices d'une plaque à circuit imprimé (21).

7. Lampe de poche selon l'une des revendications 1 à 6, caractérisée en ce que toutes les fonctions de commutation de la lampe (13) sont commandées par l'intermédiaire de la plaque à circuit imprimé (21) équipée de composants correspondants.

8. Lampe de poche selon l'une des revendications 1 à 7, caractérisée en ce que la lampe (13) est montée en lampe clignotante, dans sa position associée au capot de couleur ambrée (3).

9. Lampe de poche selon l'une des revendications 1 à 8, caractérisée en ce que la roue tournante (12) loge un élément d'arrêt rappelé par ressort (39), qui coopère avec une came (40) solidaire du boîtier ayant trois positions d'arrêt (I, 0, II), à la position d'arrêt centrale (0), à laquelle la lampe (13) prend une position à 45° par rapport aux deux capots (2, 3), la lampe (13) étant hors service, et dans les autres positions d'arrêt (I, II), auxquelles la lampe (13) sollicite soit le capot transparent comme du verre (2) soit le capot de couleur ambrée (3), la lampe (13) étant en service.

10. Lampe de poche selon l'une des revendications 1 à 9, caractérisée en ce que la roue tournante (12) est couplée latéralement de manière fixe avec une roue de commutation, qui sollicite un verrou de blocage, guidé côté boîtier par rappel de ressort, en ce qu'à l'état en service de la lampe (13), les contacts de connexion (5) de la lampe de poche (1) sont bloqués mécaniquement par le verrou de blocage contre une introduction dans la prise (20) disposée dans le support (7).

11. Lampe de poche selon le préambule de la revendication 1, caractérisée en ce que le boîtier (18) est pourvu d'un aimant permanent (14) pivotant et pouvant être arrêté à différentes positions.

12. Lampe de poche selon la revendication 11, caractérisée en ce que l'aimant permanent (14) est monté dans une découpe (42) ouverte vers le fond (41) et la paroi avant (24) du boîtier rectangulaire (18) et peut en conséquence pivoter de 90°.

13. Lampe de poche selon les revendications 11 et 12, caractérisée en ce que l'aimant permanent (14) de section transversale en U est pourvu d'un revêtement en matière plastique dense (44), les extrémités libres des branches (43) de l'aimant permanent (14) saillant du boîtier (18).

14. Lampe de poche selon l'une des revendications 11 à 13, caractérisée en ce que dans l'âme (45) de l'aimant permanent (14) est inséré un élément d'arrêt rappelé par ressort (15), qui coopère avec une came (16) côté boîtier, déterminant plusieurs positions d'arrêt.

15. Lampe de poche selon l'une des revendications 1 à 14, caractérisée en ce que le support (7) de celle-ci comprend une plaque de logement (8) avec des guidages (9, 10) saillant latéralement et avec un fond (11) reliant les guidages (9, 10), saillant en outre dans la zone centrale, la prise (20) reliée au réseau de bord du véhicule étant disposée sur le fond (11) et la zone centrale du fond (11) étant pourvue d'au moins une barrette de retenue (49) s'étendant à distance correspondante de la plaque de logement (8).

16. Lampe de poche selon la revendication 15, caractérisée en ce que sur latéralement à côté de la barrette de retenue (49) est formée sur le fond (11) une languette d'arrêt (50) avec un ergot d'arrêt (51), qui coopère avec un creux correspondant dans la paroi avant associée (24) du boîtier (18).

17. Lampe de poche selon l'une des revendications 1 à 16, caractérisée en ce que le support (7) de celle-ci est placé dans la boîte à gants de l'automobile.

18. Lampe de poche selon l'une des revendications 1 à 17, caractérisée en ce qu'elle est pourvue d'un avertisseur acoustique, à mettre en service au moyen d'un bouton-poussoir.

19. Lampe de poche selon l'une des revendications 1 à 18, caractérisée en ce qu'une ou plusieurs batteries rechargeables (4) sont logées de manière interchangeable dans le boîtier (18).

20. Lampe de poche selon l'une des revendications 1 à 19, caractérisée en ce que les batteries rechargeables (4) sont placées derrière un couvercle (17), guidé à coulissement en direction longitudinale dans la paroi latérale (22) du boîtier (18), qui porte sur sa face intérieure un pont de contact (23) reliant les batteries (4) et qui, lorsque le capot translucide (3) est enlevé de la paroi latérale (22) du boîtier (18), est déplaçable dans la zone de logement de ce capot (3).
